Europäisches Patentamt

European Patent Office

Office européen des brevets

(11) Publication number: **0 257 441**
**A2**

## (12) EUROPEAN PATENT APPLICATION

(21) Application number: 87111643.0

(22) Date of filing: **11.08.87**

(51) Int. Cl.⁴: **C08G 18/14** , C08G 18/76 , C08G 18/48 , C08J 9/12 , //C08G18/66,C08G18/18,C08G-18/24

(30) Priority: **27.08.86 US 901085**

(43) Date of publication of application: **02.03.88 Bulletin 88/09**

(84) Designated Contracting States: **BE DE ES FR GB IT NL SE**

(71) Applicant: **THE DOW CHEMICAL COMPANY 2030 Dow Center Abbott Road P.O. Box 1967 Midland, MI 48640(US)**

(72) Inventor: **Serratelli, John F. 206 Live Oak Lane Lake Jackson Texas 77566(US)** Inventor: **Turner, Robert Burton 328 Huckleberry Lake Jackson Texas 77566(US)**

(74) Representative: **Huber, Bernhard, Dipl.-Chem. et al Möhlstrasse 22 Postfach 860 820 D-8000 München 86(DE)**

(54) **Flexible polyurethane foams based on difunctional polyols and MDI and method for preparing the same.**

(57) The present invention is a flexible polyurethane foam which is prepared in the one-shot reaction of a reaction mixture comprising diphenylmethanediisocyanate or a derivative thereof having an average functionality of 2.0 to 3.0, a relatively high equivalent weight polyol or mixture thereof having an average functionality of 1.7 to 2.1, and a blowing agent.

This invention permits the use of MDI in the production of one-shot polyurethane foam. In preparing molded foams, this invention permits the ready manufacture of very complex parts such as automobile crash pads and dashboards. In slabstock foams, this invention permits the use of cheaper, lower equivalent weight polyols to prepare a foam having equivalent properties to a TDI-based foam. It often permits the preparation of lower density foam for a given amount of blowing agent, and provides for a smaller average cell size, which has been related to improved physical properties.

EP 0 257 441 A2

# FLEXIBLE POLYURETHANE FOAMS BASED ON DIFUNCTIONAL POLYOLS AND MDI AND METHOD FOR PREPARING THE SAME

This invention relates to flexible polyurethane foams prepared using difunctional polyols and diphenyl-methanediisocyanate (MID).

Flexible polyurethane foams are used in a very wide variety of applications such as, for example, bedding, furniture cushioning, automobile seating, headrests, dashboards, packaging and toys. These foams are generally prepared by reacting a nominally trifunctional, high equivalent weight polyol with a polyisocyanate, sometimes in the presence of a minor amount of a crosslinker.

These foams are commonly separated into two types according to their method of manufacture. Molded foams are prepared by reacting the polyurethane-forming components in a closed mold to produce foams having a predetermined shape. Slabstock foams are prepared by permitting the foaming components to freely rise against their own weight. Toluene diisocyanate (TDI) is the predominately used polyisocyanate in making molded polyurethane foams, although MDI, particularly the 2,4'-isomer, is sometimes commercially used. In making slabstock foams, MDI has not been successfully employed, since it is considered too reactive. TDI is almost exclusively used in making slabstock foams. MDI has been used for certain speciality applications in a two-shot (prepolymer) process wherein the MDI is prereacted with a polyol to form a prepolymer which is reacted in a subsequent step with water and, optionally, a crosslinker to form a polyurethane foam. However, large-scale commercial processes do not use such a two-shot technique and are not readily adaptable to such.

Due to certain economic advantages, and due to its known beneficial properties in making microcellular and noncellular polyurethanes, it would be desirable to employ MDI in a one-shot process to form flexible polyurethane foam.

The present invention is a flexible polyurethane foam which is prepared in a one-shot reaction of a reaction mixture comprising diphenylmethanediisocyanate or a derivative thereof having an average functionally of 2.0 to 3.0, a relatively high equivalent weight polyol or mixture thereof having an average functionality of 1.7 to 2.1, and a blowing agent.

In another aspect, this invention is a process for preparing flexible polyurethane foam comprising reacting a reaction mixture comprising dephenylmethane diisocyanate or a derivative thereof having an average functionality of from 2.0 to 3.0, a relatively high equivalent weight polyol or mixture thereof having an average functionality of 1.7 to 2.1, and a blowing agent, under conditions such that a flexible, cellular polyurethane is obtained.

Surprisingly, MDI can readily be used in a one-shot process to prepare molded or slabstock flexible polyurethane foam with the proper selection of relatively high equivalent weight polyol. Moreover, the use of the MDI provides distinct, unexpected advantages. In preparing molded foam, the use of a reaction mixture as described herein permits the ready manufacture of very complex parts such as automobile crash pads and dashboards. Previously, it was difficult and economically inefficient to manufacture such parts due to the tendency of the foam to collapse and to gel before the reaction mixture filled all sections of the mold. This collapse and premature gelling produces inferior parts and wasted materials.

In slabstock foam, this invention permits the use of cheaper, lower equivalent weight polyols to prepare a foam having properties equivalent to those of a TDI-based foam. It often permits the preparation of a lower density foam for a given amount of blowing agent, and provides for a smaller average cell size, which has been related to improved physical properties.

The flexible foam of this invention is prepared in a one-shot process from a reaction mixture comprising MDI or derivative thereof having an average functionality of 2.0 to 3.0, a relatively high equivalent weight polyol having an average functionality of 1.7 to 2.1, and a blowing agent.

The term "one-shot process" is used herein to denote a process wherein the polyisocyanate is reacted with all or most of the relatively high equivalent weight polyol in the presence of the blowing agent and other reactive components, if any. The term is used herein to encompass the use of prepolymers of MDI and a relatively high equivalent weight polyol, as long as a greater quantity of such polyol is reacted with the prepolymer to make the foam than is reacted with the MDI to form the prepolymer.

The polyisocyanate used in this invention is diphenylmethanediisocyanate (MDI) or a derivative thereof. Such derivative includes a polyisocyanate having carbodiimide biuret and/or uretonimine groups which is based on MDI (including the so-called liquid MDI) and a prepolymer such as that prepared by reacting MDI with from 0.05 to 0.3 moles of a low molecular weight diol or triol per mole of MDI. Also included are prepolymers and quasi-prepolymers prepared by reacting a stoichiometric excess of MDI with a relatively high equivalent weight polyol. However, the use of these last prepolymers is less preferred and, when such are used, the amount of polyol employed in manufacturing the prepolymer is preferably no greater than that amount reacted with the prepolymer in the preparation of the foam. Preferably, the relatively high equivalent weight polyol used in making such prepolymer is less than 50% of the weight of the such polyol which is reacted with the prepolymer to make the foam. The MDI used herein in making the foam or a prepolymer can be 2,4'-or the 4,4'-isomer, or mixtures thereof, but the 4,4'-isomer alone or as the predominant member of a mixture of the isomers is highly preferred. As stated before, the MDI or the derivative has an average functionality of 2.0 to 3.0. Preferably, the functionality is from 2.0 to 2.7, more preferably from 2.0 to 2.3.

The reaction mixture further contains a relatively high equivalent weight polyol having an average functionality of from 1.7 to 2.1. With respect to polyols, crosslinkers and chain extenders, the term functionality refers to the number of active hydrogen-containing groups per molecule of polyol. Preferably, the polyol or mixture thereof has an average functionality of from 1.8 to 2.05, and most preferably from 1.9 to 2.02. It has been found that an average polyol functionality close to 2.0 usually provides the best combination of easy processing and good physical properties.

Commercial polyols, particularly the most preferred polyether polyols based on poly(propylene oxide), contain significant amounts of monofunctional molecules. The presence of these monofunctional molecules decreases the actual average functionality of these products below their nominal functionality. As a result, many commercial "diols" have functionalities of from 1.5 to 1.95. Many commercial "triols" have actual functionalities of from 2.2. to 2.9. Because many of these nominal diols have an actual functionality of less than 1.7, it is preferred in these instances to use a blend of the diol with sufficient of a second polyol having an average functionality greater than two to provide the blend with an average functionality of from 1.7 to 2.1. Preferably, this second polyol has an actual functionality of from 2.1 to 4.0, more preferably from 2.1 to 3.0. Most preferably, this second polyol has an equivalent weight similar to that of the nominal diol. Of course, mixtures of three or more polyols which together have the required average functionality may also be employed herein. In addition, the use of the higher functionality, second polyol may be made even when the nominal diol has an average functionality of from 1.7 to 1.95.

A particularly suitable polyol is a mixture of from 35 to 90% by weight of a first polyether polyol having an average functionality of from 1.5 to 1.95, and from 10 to 65% by weight of a second polyether polyol having an average functionality of from 2.1 to 3.0, provided the mixture has an average functionality of from 1.7 to 2.1.

Most preferably, each relatively high equivalent weight polyol used has an actual functionality of from 1.9 to 2.02, that is, the polyol or mixture comprises components which are all substantially difunctional materials.

Suitable polyols include polyether polyols, polyester polyols, the so-called polymer polyols which comprise a dispersion of polymer particles in a continuous polyol phase, and other polyhydroxy-containing compounds. Most preferred are poly(tetramethylene oxide) polymers, copolymers of tetramethylene oxide and ethylene oxide and polymers and copolymers of propylene oxide. Among these, homopolymers of propylene oxide prepared in the presence of a suitable initiator, and block or random copolymers of propylene oxide and ethylene oxide are especially preferred. These propylene oxide-containing polymers tend to have monofunctional impurities.

The polyol is of a relatively high equivalent weight, i.e., its equivalent weight is such that when reacted according to the invention, a flexible polyurethane foam is obtained.

When asked to make molded foam in a hot cure process, the polyol advantageously has an equivalent weight of from 500 to 5000, preferably from 500 to 2500, and more preferably from 800 to 1500. When making molded foam in a cold cure process, the equivalent weight of the polyol is advantageously from 800 to 3000, and more preferably from 1000 to 2000. For making flexible slabstock foam, the equivalent weight of the polyol is advantageously from 500 to 5000, preferably from 500 to 2500, and more preferably from 500 to 1500. Preferred are the polyether polyols and polymer polyols containing polyether polyols. Of particular interest herein are polyethers prepared by sequentially adding propylene oxide and ethylene oxide to a dihydric or trihydric initiator to provide an 800 to 2000 equivalent weight polyether in which at least 30% of the hydroxyl groups are primary hydroxyls.

The other essential component of the reaction mixture is a blowing agent. The blowing agent is any material which is capable of generating a gas under the conditions of the reaction of a polyisocyanate and a polyol. Such materials include, for example, air, carbon dioxide, nitrogen, water, low-boiling halogenated methanes, finely divided solids and the so-called "azo" blowing agents, such as azobis-(formamide). Preferred are water, the low-boiling halogenated methanes, or mixtures thereof. Water, when employed as the sole blowing agent, is advantageously present in an amount of from 0.5 to 7 parts, preferably from 2 to 5.7 parts and most preferably from 2 to 5 parts per 100 parts of the relatively high equivalent weight polyol. The halogenated methanes, including methylene chloride, dichlorodifluoromethane, monochlorodifluoromethane and monochlorotrifluoromethane, are advantageously employed in amounts of from 5 to 50 parts per 100 parts of relatively high equivalent weight polyol. If mixtures of water and a halogenated methane are used, somewhat smaller quantities of each are advantageously present. Generally, the selection and use of blowing agents to provide a polyurethane of a desired density are well known in the art.

Polyurethane foam is prepared according to this invention by contacting the polyol, blowing agent and polyisocyanate together under condition such that the components react to form a cellular polymer. Generally, the reaction mixture contains additional components such as crosslinkers, catalysts, surfactants, colorants, cell openers, flame retardants, antioxidants and mold release agents, which may vary according to the desired attributes of the foam, and whether the foam is a molded or slabstock foam.

In making molded polyurethane foam, it is preferred to employ a minor quantity of a low equivalent weight crosslinker compound. Suitable such crosslinkers include compounds of 200 or lower equivalent weight having from 3 to 8, preferably from 3 to 4 active hydrogen-containing groups per molecule. Exemplary such compounds are glycerine and trimethylolpropane, as well as other alkylene triols. Preferred, however, are alkanolamines such as diethanolamine, triethanolamine, triisopropanolamine, diisopropanolamine, adducts of from 4 to 8 moles of ethylene oxide and/or propylene oxide and ethylene diamine, and polyamines such as, for example, methylene bis(o-chloroaniline) and ethylenediamine and ammonia. Most preferred is diethanolamine. From 0.2 to 4.0 parts by weight of the crosslinker are generally used per 100 parts of relatively high equivalent weight polyol in making molded polyurethane foam.

In order to make a stable molded foam, i.e., one which does not collapse or contain significant quantities of large pores, it is preferred to employ a surfactant which stabilizes the foaming reaction mixture against collapse until the mixture is sufficiently cured to maintain its shape. Suitable surfactants include silicone/poly(alkylene oxide) copolymers as are described, for example, in U. S. Patent Nos. 3,887,500 and 3,957,842. The selection and use of such surfactants in preparing polyurethane foam is well known in the art.

The reaction mixture for preparing molded polyurethane foam also preferably contains one or more catalysts which increase the rate of the reaction of the polyol, crosslinker and water, when present, with the polyisocyanate. Although a wide variety of materials are known to be useful for this purpose, the most widely used and preferred catalysts are the tertiary amine catalysts and the organotin catalysts.

Tertiary amine catalysts include, for example, triethylenediamine, N-methyl morpholine, N-ethyl morpholine, diethyl ethanolamine, N-coco morpholine, 1-methyl-4-dimethylaminoethyl piperazine, 3-methyoxy-N-dimethylpropyl amine, N,N-diethyl-3-diethylaminopropylamine and dimethylbenzyl amine. Tertiary amine catalysts are advantageously employed in an amount of from 0.01 to 2 parts per 100 parts by weight of the high equivalent weight polyol.

Exemplary organotin catalysts include dimethyltindilaurate, dibutyltindilaurate and stannous octoate. Other suitable catalysts are taught, for example, in U. S. Patent No. 2,846,408. Advantageously, from 0.001 to 0.5 parts by weight of organotin catalyst are used per 100 parts by weight of relatively high equivalent weight polyol.

In making molded polyurethane foam, it is most preferred to use one or more tertiary amine catalysts, or a combination comprising an organotin catalyst and one or more tertiary amine catalysts, in order to obtain optimum sequencing of the blowing and curing reactions. As is well known in the art, careful selection or catalysts and surfactants is usually necessary to produce a high quality foam.

In preparing molded polyurethane foam, all components, except the polyisocyanate, are advantageously blended together and injected as a single stream into a mixing head. However, certain components such as catalysts or halogenated methane blowing agents are sometimes blended with the polyisocyanate. In addition, the water and surfactant can be introduced as a separate stream, if desired. The polyisocyanate is added to the mixing head as a separate stream where it is mixed with the polyol mixture and injected into the mold. In performing the mixing and mold-filling step, conventional, low pressure apparatus can be used, or high pressure impingement mixing processes, such as a reaction injection molding process, can be used. Generally, the components are blended while at approximately room temperature, although components such as pure MDI which are solid at room temperature may be heated above their melting points.

In one molding technique the reactants are placed into a mold which is at ambient temperature. After filling the mold, it is placed into an oven at a temperature of from 150 to 275°C to effect curing. In a second technique, the reactants are placed into a mold which is preheated to a temperature of from 30 to 75°C. After the mold is filled it is placed in a 70 to 150°C oven to effect cure. In a third technique, the filled mold is maintained at ambient temperature during the curing process. In this third technique, the mold may or may not be preheated.

Sufficient of the reaction mixture is injected into the mold so that, after expansion, the mixture completely fills the mold. Advantageously, a small excess of material is injected over that minimally required to fill the mold. After filling the mold, the reaction mixture is permitted to cure in the mold at least to a state of cure which permits the molded foam to be removed from the mold without permanent undesired distortion. In typical commercial procedures, an in-mold cure time of from 2 to 30 minutes is adequate for this purpose. If required, the foam can be post-cured by heating to a temperature of from 50 to 120°C for a period of from 10 minutes to 24 hours, preferably from 20 minutes to 2 hours.

Often, it is necessary to mechanically open the cells of the molded foam during or after cure. This can be done by crushing the foam, puncturing the foam, vacuum crushing the foam, or by releasing the pressure in the mold at a proper stage of cure as taught in U.S. Patent No. 4,579,700.

In making slabstock foam, the reaction mixture also advangageously contains a surfactant and catalyst as described before. Crosslinkers, although sometimes used, are often omitted from slabstock formulations. In the commercial production of slabstock foam, the components can be and typically are introduced individually to a mixing head where they are thoroughly blended and metered onto a bed where foaming takes place. However, preblending of the components, except for the polyisocyanate, can be done if desired. The components are advantageously at room temperature or a slightly elevated temperature when blended in the mixing head, although preheating may be necessary in some instances to melt components which are solid at room temperature.

The foam of this invention advantageously has a density of from 0.7 to 30 (1.12 to 48 kg/m$^3$), preferably 0.8 to 5 pounds per cubic foot (1.28 to 8 kg/m$^3$).

Various unexpected advantages are seen in the production of foam according to this invention, and in the foams so produced. In making molded foams, this invention provides a foam formulation which is less sensitive to low pressure voiding and less likely to collapse around corners and mold lips in a complicated tool. As a result, fewer imperfect and incomplete moldings are produced, saving substantial raw material, energy and time.

Slabstock foams of this invention generally have a small cell size, which is known to be related to improved physical properties. In addition, this invention makes possible the use of MDI in a commercially feasible, one-shot flexible foam formulation. Moreover, at a given level of blowing agent, this invention often provides foams of a lower density than conventional flexible foams based on TDI and trifunctional polyols.

Another advantage of this invention is that it permits the use of chain extenders to modify the hardness (indentation load deflection) of a polyurethane foam. Chain extenders useful herein are low equivalent weight substantially difunctional compounds. Exemplary chain extenders include $\alpha,\omega$-alkylene glycols such as ethylene glycol and 1,4-butanediol, glycol ethers such as diethylene glycol, triethylene glycol and dipropylene glycol, aromatic diamines such as toluene diamine, diethyltoluene-diamine, methylene bis(o-chloroaniline) and methylene dianiline. Most preferred are the $\alpha,\omega$-alkylene glycols, especially ethylene glycol and 1,4-butanediol.

The users of these chain extenders in increasing amount permits the manufacture of harder foams without significantly adversely affecting the ability of the reaction mixture to fill a complex mold. Approximately 2 to 25, preferably 2 to 15, parts by weight of chain extender are advantageously used per 100 parts of the relatively high equivalent weight polyol.

The foam of this invention is useful, for example, as bedding, furniture cushioning, padding, carpet underlayment, automobile head rests, crash pads, door handles, head liners and seating.

The following examples are provided to illustrate the invention but are not intended to limit the scope thereof. All parts and percentages are by weight unless otherwise indicated.

The materials and test procedures used in the examples are described below.

## MATERIALS

Polyol A A 2000 equivalent weight ethylene oxide-capped poly(propylene oxide) containing 18% by weight ethylene oxide end-capping.
Nominal functionality = 2.0.
Actual functionality = 1.74.

Polyol B A 2000 equivalent weight ethylene oxide-capped poly(propylene oxide) containing 15% by weight ethylene oxide end-capping.
Nominal functionality = 3.0.
Actual functionality = 2.24.

Polyol C An 1800 equivalent weight poly(propylene oxide) diol having 5% by weight ethylene oxide capping and an average functionality of 1.87.

Polyol D A 2000 equivalent weight ethylene oxide capped poly(propylene oxide) containing 18% by weight ethylene oxide end capping.

Nominal functionality = 20.

Actual functionality = 1.91.

Silicone Surfactant B4113 -A silicone surfactant sold by Goldschmidt.

Silicone Surfactant A -A silicone surfactant sold by Union Carbide Corporation as Y10148.

Silicone Surfactant B -A silicone surfactant sold by Union Carbide Corporation as L540.

Silicone Surfactant C -A silicone surfactant available from Dow Corning Corporation as DC 5402.

Cell Opener - A 5000 molecular weight polyether having a functionality of 3.

Crosslinker A -A 126 equivalent weight poly(propylene oxide) having an average functionality of 4.5.

Crosslinker B -A 255 molecular weight poly(propylene oxide) having a functionality of 3.0

Crosslinker C -A 156 equivalent weight poly(propylene oxide) having a functionality of 4.7.

Colorant - A reactive dye available from Milliken Chemicals.

Catalyst A -A proprietary blend of amine catalysts available as X543 from Air Products and Chemicals.

Catalyst B -A proprietary blend of amine catalysts available as A540 from Air Products and Chemicals.

A 107 Catalyst -A proprietary tertiary amine catalyst, sold by Union Carbide Corporation.

Polycat 77 Catalyst -A proprietary tertiary amine catalyst sold by Abbott Laboratories.

Amine Catalyst -An amine catalyst available from Union Carbide Corporation as A-1.

Organotin Catalyst -Dibutyltin di(thiolaurate).

Acid Blocked Amine Catalyst - An amine catalyst sold by Union Carbide Corporation as C 225.

Polymeric MDI A -A polymeric MDI having an equivalent weight of 133 and an average functionality of 2.3.

Polymeric MDI B -A polymeric MDI having an average functionality of 2.7.

Liquid MDI -A 143 equivalent weight MDI derivative.

## TEST-PROCEDURES

| Property | Test Procedure |
| --- | --- |
| Tensile Strength | ASTM D-3574-81 Test E |
| Elongation | ASTM D-3574-81 Test E |
| Tear Strength | ASTM D-3574-81 Test F |
| ILD(Indentation Load Deflection) | ASTM D-3574-81 Test B |
| Compression Set (Sample aged for 22 hours at 70°C) | ASTM D-3574-81 Test D |
| HACS (Humid Age Compression Set) | ASTM D-3574-81 Test D |

Example 1

Foam Sample Nos. 1 and 2 were prepared from formulations as described in Table 1. The average functionality of Polyol A, Polyol B and the cell opener was 1.92.

## TABLE 1

### Parts by Weight

| Component | Sample No. 1 | Sample No. 2 |
|---|---|---|
| Polyol A | 80 | 80 |
| Polyol B | 20 | 20 |
| Cell Opener | 4 | 4 |
| Water | 1.7 | 1.7 |
| Glycerine | 3.6 | 3.6 |
| Silicone Surfactant B4113 | 0.5 | 0.5 |
| Polycat 77 catalyst | 1.0 | 1.0 |
| A107 catalyst | 0 | 0.3 |
| Polymeric MDI A | 44.7 | 44.7 |

In making the foam, all ingredients except the polyisocyanate were thoroughly blended. The polyisocyanate was stirred in at room temperature, and the mixture poured into a cup and permitted to foam at room temperature. Sample No. 1 exhibited a cream time of 23 seconds, a gel time of 69 seconds and a rise time of 99 seconds. On a resilience test (ASTM D3574-81), it exhibited a value of 64%. It also exhibited very slight shrinkage on cooling. Sample No. 2 exhibited a creamtime of 18 seconds, a gel time of 50 seconds and a rise time of 75 seconds. It exhibited no shrinkage and scored 65% on the resiliency test. Both Sample No. 1 and Sample No. 2 were excellent foams.

Example 2

A series of three molded flexible polyurethane foams (Sample Nos. 3-5) were made according to the invention. These foams were prepared from the formulations described in Table 2 following. The blend of Polyol A and the cell opener yielded a mixture having an average functionality of 1.78.

## TABLE 2

### Parts By Weight

| Component | Sample No. 3 | Sample No. 4 | Sample No. 5 |
| --- | --- | --- | --- |
| Polyol A | 100 | 100 | 100 |
| Cell Opener | 4 | 4 | 4 |
| Colorant | 1 | 1 | 1 |
| Catalyst A | 0.5 | 0.5 | 0.5 |
| Catalyst B | 0.5 | 0.5 | 0.5 |
| A107 Catalyst | 0.47 | 0.47 | 0.47 |
| Crosslinker A | 4 | 0 | 0 |
| Glycerine | 3.6 | 3.6 | 3.6 |
| Crosslinker B | 0 | 0 | 4 |
| Crosslinker C | 0 | 4 | 0 |
| Polymeric MDI A | 53.6 | 53.6 | 53.6 |
| Surfactant B4113 | 0.5 | 0.5 | 0.5 |
| Water | 1.8 | 1.8 | 1.8 |

Foam Sample Nos. 3-5 were prepared by blending all components except the MDI, then adding the MDI and pouring the mixture into an open box mold which was at ambient temperature. The mixture was permitted to react in the mold while maintaining the mold in a room temperature environment. After 3 minutes cure time, the foam was demolded and cooled. After curing, the physical properties of the foam were measured, with results as indicated in Table 3.

### TABLE 3

| Sample No. | 3 | 4 | 5 |
|---|---|---|---|
| Density, lb/ft$^3$ (kg/m$^3$) | 7.4 (11.8) | 7.1 (11.4) | 7.1 (11.4) |
| Tensile Strength, psi (MPa) | 31.3 (0.216) | 34.4 (0.237) | 31.7 (0.218) |
| Elongation, % | 52 | 55 | 54 |
| Tear Strength, p.l.i. (kN/m) | 0.96 (0.168) | 1.07 (0.187) | 0.97 (0.17) |
| ILD, pounds (kg) | | | |
| 25% | 6.1 (2.77) | 7.0 (3.18) | 6.4 (2.90) |
| 65% | 18.8 (8.53) | 13.4 (6.08) | 12.4 (5.62) |
| ret 25% | 3.2 | 3.7 | 3.4 |
| Modulus | 3.1 | 1.9 | 1.9 |
| Compression Set | 41.3 | 40.3 | 42.1 |

Foams of this type are suitable for preparing molded automobile padding.

Example 3

Foam Sample No. 6 was prepared from the formulation described in Table 4.

### TABLE 4

| Component | Parts By Weight |
|---|---|
| Polyol C | 100 |
| Diethanolamine | 0.5 |
| Water | 4.5 |
| Silicone surfactant A | 0.5 |
| Silicone surfactant B | 0.3 |
| Acid blocked amine catalyst | 1 |
| Polymeric MDI A | 53.3 |

The foam was prepared by blending all components except the MDI, and then mixing in the MDI at room temperature. The resulting reaction mixture was poured into a mold which was preheated to 140°F (60°C). The mold was closed and allowed to sit at ambient temperature for 3 minutes, at which time the foam was demolded. The physical properties of resulting Foam Sample No. 6 were measured after cooling. The foam had a density of 2.31 lb/ft³ (3.7 kg/m³), ILD values of 67 (30.4kg) 25%, 183 (83 kg) 65% and 37 pounds (16.8 kg), return to 25%, and a modulus of 2.74. This foam had excellent load-bearing properties.

Example 4

Foam Sample Nos. 7-9 were prepared by reacting formulations as described in Table 5. In Sample No. 7, mixture of Polyol A and the cell opening had an average functioanlity of 1.78. In Sample Nos. 8 and 9, the mixture of Polyol A and the cell opener had an average functionality of 1.76.

## TABLE 5

### Parts By Weight

| Component | Sample No. 7 | Sample No. 8 | Sample No. 9 |
|---|---|---|---|
| Polyol A | 100 | 100 | 100 |
| Water | 1.86 | 1.8 | 1.65 |
| Cell Opener | 4.0 | 2.0 | 2.0 |
| Surfactant | 0.5 | 0.5 | 0.5 |
| Crosslinker A | 4.0 | 4.0 | 2.0 |
| Glycerine | 3.6 | 3.6 | 2.0 |
| A107 catalyst | 0.47 | 0.42 | 0.43 |
| Catalyst A | 1.0 | 0.9 | 0.95 |
| Colorant | 1.0 | 1.0 | 1.0 |
| Polymeric MDI B | to provide 100 index | | |

The Foam Samples were prepared on an EMB Puromat 80 high pressure foam machine. The components were mixed and injected into the mold at a temperature of 25°C. The mold, at the time the reactants were injected, was at a temperature of from 18 to 43°C. This variation in mold temperature was not considered critical to the results obtained. After the mold was filled, the reaction mixture was permitted to cure for three minutes within application of heat to the mold. The foam was then demolded and cooled. Physical testing of the foam gave results as indicated iin Table 6 following.

## TABLE 6
### Sample Number

| Property | 7 | 8 | 9 |
|---|---|---|---|
| Tensile Str., psi (MPa) | 16.1 (0.111) | 15.7 (0.108) | 15.8 (0.109) |
| Elongation, % | 40 | 58.5 | 49 |
| Tear Str., p.l.i. (kN/m) | 0.55 (0.096) | 0.59 (0.103) | 0.74 (0.13) |
| HACS, % | 31.4 | 25.3 | 25.9 |
| ILD, pounds (kg) | | | |
| 25% | 6.54 (2.97) | 7.33 (3.33) | 5.38 (2.44) |
| 65% | 19.5 (8.85) | 22.7 (10.3) | 17.4 (7.9) |
| ret 25% | 4.00 (1.81) | 5.18 (2.35) | 3.69 (1.67) |
| Modulus | 2.98 | 3.10 | 3.23 |

These foams had excellent load bearing (ILD) values and modulus.

Example 5

Using the general method described in Example 4, molded polyurethane foam Sample No. 10 and 11 were prepared from the formulation set out in Table 7. In making Sample No. 10, a 2.7 functional polymeric MDI was used at 100 index. In making Sample No. 11, a 2.3 functional polymeric MDI was used, again at a 100 index. In each sample, the functionality of the mixture of Polyol A, Polyol B and cell opener was 2.0.

## TABLE 7

| Component | Parts by Weight |
|---|---|
| Polyol A | 40 |
| Polyol B | 60 |
| Water | 1.8 |
| Glycerine | 0.5 |
| Cell Opener | 4.0 |
| 1,4-butanediol | 10 |
| Colorant | 1.0 |
| Catalyst A | 1.0 |

The properties of the resulting foam are as indicated in Table 8.

## TABLE 8

| Property | Sample No. 10 | Sample No. 11 |
|----------|---------------|---------------|
| Density, lb/ft$^3$ (kg/m$^3$) | 6.7 (10.7) | 7.3 (11.7) |
| Tensile Str., psi (MPa) | 25.2 (0.174) | 34.8 (0.24) |
| Elongation, % | 64 | 82 |
| Tear Str., p.l.i. (kN/m) | 0.83 (0.145) | 1.21 (0.212) |
| ILD, pounds (kg) | | |
| 25% | 8.7 (3.95) | 6.0 (2.72) |
| 65% | N.D. | 18.8 (8.53) |
| ret 25% | N.D. | 3.4 (1.54) |
| Modulus | N.D. | 3.13 |
| Compression Set, % | 29.6 | N.D. |
| HACS | 26.0 | N.D. |

N.D. = not determined

These foams had excellent tensile properties and compression sets.

Example 6

A foam (Sample No. 12) was prepared from a formulation described in Table 9.

## Table 9

| Component | Parts by Weight |
|---|---|
| Polyol D | 100 |
| Diethanol amine | 1 |
| Water | 4 |
| 33% Triethylene diamine solution | 0.35 |
| Amine catalyst | 0.2 |
| Organotin catalyst | 0.045 |
| Silicone surfactant C | 1.2 |
| Silicone surfactant A | 0.7 |
| Refrigerant F-11 | 9 cc |
| Liquid MDI | 76.03 |

All components except the polyisocyanate were blended. The polyisocyanate was then added to the other components and the resulting mixture permitted to cure at room temperature. An excellent, low resilience, fine-celled foam was obtained.

## Claims

1. A flexible polyurethane foam which is prepared in a one-shot reaction of a reaction mixture comprising diphenylmethanediisocyante or a derivative thereof having an average functionality of from 2.0 to 3.0, as relatively high equivalent weight polyol or mixture thereof having an average functionality of from 1.7 to 2.1, and a blowing agent.

2. A foam as claimed in Claim 1 wherein said relatively high equivalent weight polyol or mixture thereof has an average equivalent weight of from 500 to 2500.

3. A foam as claimed in Claim 1 or Claim 2 wherein said relatively high equivalent weight polyol or mixture thereof comprises a polyether polyol having an average functionality of from 1.9 to 2.02 or a poly-(propylene oxide) polymer.

4. A foam as claimed in Claim 1 or Claim 2 wherein said relatively high equivalent weight polyol or mixture thereof comprises a mixture of a poly(propylene oxide) polymer having a functionality of from 1.5 to 1.95, and a second poly(propylene oxide) polymer having an average functionality of from 2.1 to 3.0.

5. A foam as claimed in Claim 4 wherein the poly(propylene oxide) polymers are block or random copolymers of propylene oxide and ethylene oxide.

6. A foam as claimed in any one of the preceding claims wherein the reaction mixture further comprises a crosslinker, a silicone surfactant, a catalyst and a chain extender.

7. A foam as claimed in any one of the preceding claims which is a slabstock foam.

8. A method for preparing a flexible polyurethane foam comprising reacting a reaction mixture comprising diphenylmethanediisocyanate or a derivative thereof having an averge functionality of from 2.0 to 3.0, a relatively high equivalent weight polyol or mixture thereof having an average functionality of from 1.7 to 2.1, and a blowing agent, under conditions such that a flexible, cellular polyurethane is obtained.

9. A flexible polyurethane foam which is the reaction product of a reaction mixture comprising

a) diphenylmethanediisocyanate or a derivative thereof having a functionality of from 2.0 to 3.0,

b) a polyether polyol or mixture thereof having an average equivalent weight of from 500 to 2500 and an average functionality of from 1.7 to 2.1,

c) a blowing agent,

d) a tertiary amine catalyst and

e) a silicone surfactant.

10. A foam as claimed in Claim 9 wherein component (b) comprises a mixture comprising from 35 to 90% by weight of a polyol having an average functionality of from 1.5 to 1.95, and from 20 to 65% by weight of a polyol having an average functionality of from 2.1 to 3.0.